(19) Europäisches Patentamt / European Patent Office / Office européen des brevets

(11) **EP 4 263 312 B1**

(12) **FASCICULE DE BREVET EUROPEEN**

(45) Date de publication et mention
de la délivrance du brevet:
**22.01.2025 Bulletin 2025/04**

(21) Numéro de dépôt: **21836460.2**

(22) Date de dépôt: **10.12.2021**

(51) Classification Internationale des Brevets (IPC):
***B60W 60/00*** (2020.01)    ***B60W 30/10*** (2006.01)
***B60W 50/14*** (2020.01)    ***B60W 50/00*** (2006.01)

(52) Classification Coopérative des Brevets (CPC):
**B60W 60/0018; B60W 30/10; B60W 50/0097;
B60W 50/14;** B60W 2050/0013; B60W 2050/0088;
B60W 2050/143; B60W 2050/146; B60W 2520/10;
B60W 2540/18; B60W 2556/20; B60W 2720/10;
B60W 2720/14

(86) Numéro de dépôt international:
**PCT/EP2021/085303**

(87) Numéro de publication internationale:
**WO 2022/128821 (23.06.2022 Gazette 2022/25)**

(54) **DISPOSITIF ET PROCÉDÉ DE CONTRÔLE DE VÉHICULE DÉPENDANT DE LA TRAJECTOIRE**

VORRICHTUNG UND VERFAHREN ZUR TRAJEKTORIENABHÄNGIGEN
FAHRZEUGSTEUERUNG

DEVICE AND METHOD FOR TRAJECTORY-DEPENDENT VEHICLE CONTROL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.12.2020 FR 2013432**

(43) Date de publication de la demande:
**25.10.2023 Bulletin 2023/43**

(73) Titulaire: **Ampere SAS
92100 Boulogne-Billancourt (FR)**

(72) Inventeurs:
• **GONZALEZ BAUTISTA, David
78210 SAINT CYR L'ÉCOLE (FR)**
• **MILANES, Vicente
78084 GUYANCOURT CEDEX (FR)**
• **NAVAS MATOS, Francisco Martin
92170 VANVES (FR)**

(74) Mandataire: **Renault Group
Renault s.a.s.
1 avenue du Golf
FR TCR AVA 055
78084 Guyancourt Cedex (FR)**

(56) Documents cités:
**EP-A1- 3 719 449    DE-A1- 102015 003 960**

• **LI XIAOHUI ET AL: "Combining local trajectory
planning and tracking control for autonomous
ground vehicles navigating along a reference
path", 17TH INTERNATIONAL IEEE
CONFERENCE ON INTELLIGENT
TRANSPORTATION SYSTEMS (ITSC), IEEE, 8
October 2014 (2014-10-08), pages 725 - 731,
XP032685604, DOI: 10.1109/ITSC.2014.6957775**

**Description**

Domaine technique

L'invention concerne de manière générale les systèmes de contrôle de véhicules, et en particulier un dispositif et un procédé de contrôle dépendant de la trajectoire du véhicule.

Dans les véhicules automatisés ou semi-automatisés, un système de contrôle est généralement utilisé pour contrôler les dynamiques du véhicule, tels que les systèmes ADAS (acronyme pour « Advanced driver-assistance systems ») ou les systèmes AD (acronyme pour « autonomous driving »).

Pour anticiper la route à suivre et adapter le comportement du véhicule à des événements imprévus, de tels systèmes de contrôle peuvent utiliser un capteur de trajectoire embarqué, en charge de détecter le tracé des routes, pour estimer la trajectoire que le véhicule doit suivre. Cependant, il arrive qu'un tel capteur réduise soudainement son horizon électronique (c'est-à-dire son champ de vision) ce qui impacte la visibilité du tracé de route.

Certains systèmes de contrôle de véhicule dépendent fortement de l'identification du tracé de route effectué par le capteur de trajectoire, qui permet d'évaluer à quelle distance le véhicule peut voir la voie dans laquelle il se déplace. Or, les systèmes de contrôle existants autorisent l'activation du système de contrôle autonome même lorsque la visibilité du tracé de route est faible, de sorte qu'il arrive que, lorsque le système est activé, le véhicule sorte de la route.

Il existe des systèmes de conduite autonomes plus évolués, basés sur une planification de trajectoire, capables de fournir une trajectoire douce de référence au système de contrôle du véhicule. Cette trajectoire est basée sur la vitesse et dépend des capacités du capteur de trajectoire embarqué. Un tel système de contrôle utilise un contrôleur de véhicule statique qui peut utiliser la courbure de la voie prédite ou un paramètre de rétroaction pour effectuer un contrôle latéral du véhicule. Le contrôleur statique est activé pour suivre correctement la trajectoire de référence pour une vitesse donnée du véhicule. Dans certaines situations, le contrôleur statique peut nécessiter des informations de tracé de route relativement éloignées, ce qui signifie que le contrôleur statique peut générer un comportement indésirable, jusqu'à amener le véhicule en dehors des limites de voie.

Dans US9731755B1, un procédé pour fournir une commande de direction latérale de véhicule est proposé. Le procédé utilise un modèle mathématique de la dynamique du véhicule qui comprend une variable d'état, une variable de commande de direction et un futur facteur de perturbation de la route. Cependant, cette solution ne permet pas non plus de fournir un contrôle efficace dans les situations où le capteur embarqué a un fonctionnement dégradé.

Le document XP032685604 divulgue un schéma intégré de planification et de contrôle de trajectoire locale pour la navigation de véhicules terrestres autonomes (AGV) le long d'une trajectoire de référence avec évitement d'obstacles statiques. Au lieu d'appliquer des contrôleurs de rétroaction traditionnels basés sur la trajectoire transversale pour diriger le véhicule afin qu'il suive la trajectoire de référence le plus fidèlement possible, nous décomposons la tâche de suivi de la trajectoire en deux sous-tâches. Tout d'abord, afin de suivre la trajectoire de référence avec des mouvements fluides et d'éviter les obstacles, il applique un planificateur de trajectoire prédictif efficace basé sur un modèle, qui prend en compte les informations géométriques de la trajectoire souhaitée, les contraintes cinématiques et les contraintes dynamiques partielles afin d'obtenir une trajectoire sans collision et dynamiquement faisable dans chaque cycle de planification. La trajectoire générée est ensuite transmise au contrôleur de suivi de trajectoire de bas niveau.

Ainsi, il existe un besoin pour un dispositif et un procédé de contrôle amélioré du véhicule.

Définition générale de l'invention

L'invention vient améliorer la situation en proposant un système de contrôle de véhicule comprenant un système de perception selon la revendication 1.

Dans un mode de réalisation, l'état courant du véhicule peut être défini par au moins un paramètre d'état parmi l'angle de braquage du véhicule, la vitesse angulaire de braquage du véhicule, la vitesse du véhicule, la courbure cible du véhicule à l'instant courant considéré.

Les conditions de contrôle peuvent définir des conditions d'acceptabilité d'un ensemble d'objectifs de contrôle de véhicule prédéfinis.

Dans des modes de réalisation, le dispositif de contrôle latéral peut comprendre en outre une unité de vérification de performance minimale configurée pour vérifier des conditions relatives à un ensemble de paramètres auxiliaires relatifs à la qualité de la réponse du véhicule au contrôle appliqué par le dispositif de contrôle latéral, les paramètres de contrôle comprenant au moins :

- un paramètre de fiabilité de la réponse du véhicule au contrôle, et
- un paramètre de faisabilité de la réponse du véhicule par rapport aux dynamiques du véhicule en fonction de la distance maximale déterminée par l'unité de détermination de distance maximale.

Dans un mode de réalisation, le dispositif de contrôle latéral comprend en outre un gestionnaire d'actionneurs du véhicule configuré pour gérer au moins un actionneur du véhicule en fonction de la distance maximale calculée par l'unité de détermination de distance maximale et de la sortie du contrôleur latéral.

Dans des modes de réalisation, le dispositif de contrôle latéral peut comprendre en outre un gestionnaire d'affichage configuré pour générer un affichage du mode de contrôle du véhicule en fonction de la sortie de l'unité de détermination de distance maximale et du niveau de qualité de l'adaptateur de contrôle, le mode de contrôle comprenant un mode parmi un mode non autonome, où le système de contrôle n'est pas activé, et un mode autonome où le système de contrôle est activé.

En particulier, le niveau de la qualité de l'adaptateur de contrôle peut être déterminé par l'unité de vérification de performance minimale, l'unité de vérification de performance minimale étant configurée pour générer un signal d'alerte si le niveau de qualité de l'adaptateur de contrôle est supérieur à un seuil prédéfini.

Dans un mode de réalisation, l'adaptateur de contrôle peut être configuré pour adapter les paramètres de contrôle à partir d'une minimisation de la différence entre un taux de lacet cible du véhicule et un taux de lacet du véhicule courante.

Le taux de lacet cible du véhicule peut être calculé à partir d'une courbure cible du véhicule et de la position courante du véhicule.

Dans des modes de réalisation, l'adaptateur de contrôle peut être configuré pour minimiser l'erreur de taux de lacet ($\omega_{error}$) en la multipliant par un gain de contrôleur (K).

Il est en outre fourni un procédé de contrôle de véhicule implémenté dans un véhicule comprenant un système de perception selon la revendication 11.

L'invention fournit en outre un programme d'ordinateur comprenant des instructions de code de programme pour exécuter les étapes d'un tel procédé, lorsque le programme fonctionne sur un ordinateur

Les modes de réalisation de l'invention permettent ainsi de fournir un contrôle latéral dynamique du véhicule adapté à l'horizon électronique du capteur de trajectoires.

Les modes de réalisation de l'invention permettent d'assurer un contrôle optimal dans les situations où le capteur embarqué en charge de détecter la trajectoire de route (trajectoire à venir que le véhicule doit suivre) réduit soudainement son horizon électronique correspondant à son champs de vision.

Brève description des dessins

D'autres caractéristiques, détails et avantages de l'invention ressortiront à la lecture de la description faite en référence aux dessins annexés donnés à titre d'exemple et qui représentent, respectivement :

- [Fig 1] La figure 1 représente un système de contrôle, selon certains modes de réalisation de l'invention ;

- [Fig 2] La figure 2 illustre un exemple de scénario de conduite dégradé ;

- [Fig 3] La figure 3 illustre le fonctionnement d'un dispositif de contrôle de l'art antérieur ;

- [Fig 4] La figure 4 représente l'indice de vecteur de trajectoire cible et l'erreur de trajectoire correspondant au cas d'usage de la figure 3, pour un dispositif de contrôle de l'art antérieur ;

- [Fig 5] La figure 5 illustre le fonctionnement d'un dispositif de contrôle selon les modes de réalisation de l'invention ;

- [Fig 6] La figure 6 représente l'indice de vecteur de trajectoire cible et l'erreur de trajectoire correspondant au cas d'usage de la figure 5, pour un dispositif de contrôle selon les modes de réalisation de l'invention et pour un dispositif de contrôle de l'art antérieur ;

- [Fig 7] La figure 7 représente une interface de contrôle associé au dispositif de contrôle, selon un exemple de réalisation de l'invention ;

- [Fig 8] La figure 8 est un organigramme représentant le procédé de contrôle, selon les modes de réalisation de l'invention ; et

- [Fig 9] La figure 9 représente un dispositif informatique selon un mode de réalisation de l'invention.

Description détaillée

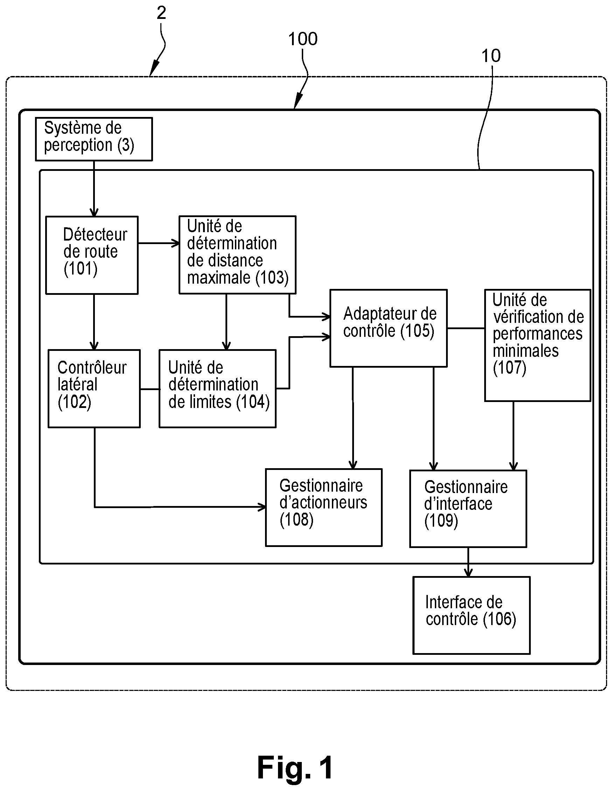

La figure 1 représente un système de contrôle 100, selon certains modes de réalisation de l'invention.

Le véhicule 2 peut être un véhicule automatisé (par exemple un véhicule autonome) ou semi-automatisé (le véhicule 2 est encore appelé « véhicule ego »).

Le système de contrôle 100 peut utiliser les informations détectées par un ou plusieurs capteurs embarqués sur le véhicule 2. Les capteurs peuvent notamment comprendre au moins un capteur de trajectoire associé à un horizon électronique (appelé ci-après « e-horizon »). Les capteurs font partie d'un système de perception 3.

L'horizon électronique (ou « e-horizon ») associé à un capteur fait généralement référence à la plus longue distance (en mètre) à laquelle le capteur peut opérer. L'horizon électronique peut être lié à la plus longue distance à laquelle un capteur (par exemple de type caméra) peut détecter des lignes de marquage de voie précisément, une telle information pouvant provenir, par exemple et de manière non limitative, de cartes numériques. Dans un exemple de système de perception 3 basé sur un capteur de type caméra et un autre capteur de type Lidar, l'horizon électronique peut être par exemple situé entre 40 et 100 mètres en fonction de la qualité du Lidar.

L'ensemble de capteurs peut en outre comprendre à titre d'exemple un ou plusieurs capteurs parmi un lidar (Laser Détection And Ranging), un radar, une caméra (caméra fonctionnant dans le visible ou caméra fonctionnant dans l'infrarouge), un capteur à ultrasons, un capteur d'angle de volant, un capteur de vitesse de roue, un capteur de pression de freinage, un capteur de taux de lacet et d'accélération transversales, etc.

Avantageusement, le système de contrôle 100 met en oeuvre un contrôle dynamique adapté à l'horizon électronique détecté par un capteur de trajectoire (non représenté) embarqué sur le véhicule 2.

Le système de contrôle 100 peut être par exemple et sans limitation un système d'aide à la conduite tel qu'un système ADAS ou AD.

Le système de contrôle 100 est apte à contrôler les dynamiques du véhicule 2 en réponse à une commande demandée.

Le système de perception 3 peut être configuré pour détecter et /ou identifier, à partir des informations mesurées par les capteurs, des objets de l'environnement du véhicule 2. Le système de perception 3 peut en outre utiliser des algorithmes de fusion pour traiter les informations issues des différents capteurs et utiliser les informations traitées dans des opérations de perception, telles que la détection et/ou le suivi d'obstacles, le suivi et la prédiction de l'évolution de l'environnement du véhicule 2 dans le temps, la génération d'une carte dans laquelle est positionnée le véhicule 2, la localisation du véhicule 2 sur une carte, la détermination de la localisation globale du véhicule 2, etc. De tels algorithmes de fusion multi-capteur peuvent combiner des informations issues des différents capteurs. Le système de perception peut notamment utiliser des données fournies par un système de positionnement. Le système de positionnement peut être avantageusement un système de positionnement par Satellite GNSS (acronyme pour « Global Navigation Satellite System »). Le système GNSS peut être en outre configuré pour fournir des informations relatives à la position du véhicule 2 mais aussi à la position de véhicule détecté dans l'environnement du véhicule 2.

Le système de contrôle de conduite autonome 100 utilise au moins un capteur de trajectoire de véhicule pour déterminer un tracé de route, le tracé de route représentant la trajectoire à suivre par le véhicule 2.

Le système de contrôle 100 comprend un dispositif de contrôle latéral 10 configuré pour fournir un contrôle du véhicule adapté à l'e-horizon du capteur de trajectoire 200.

Dans des modes de réalisation, le dispositif de contrôle latéral 10 peut comprendre un détecteur de route 101 basé sur la perception configuré pour déterminer, pour un état courant du véhicule, des informations de tracé de route devant le véhicule, correspondant à l'état courant du véhicule, à partir des informations fournies par le système de perception 3. L'état courant du véhicule est défini par un ensemble de paramètres d'état correspondant à l'instant courant.

Le détecteur de route 101 peut utiliser les données fournies par tout capteur ou tout composant de détection d'espace navigable (tel qu'une caméra par exemple) capable de capturer de telles informations. Le détecteur de route 101 peut fournir en sortie un polynôme d'ordre n représentant le tracé de route correspondant à la trajectoire à suivre par le véhicule 2.

Le dispositif de contrôle peut en outre comprendre un contrôleur latéral 102 et une unité de détermination de distance maximale 103 auxquels est transmise la sortie du détecteur de route 101.

Le contrôleur latéral 102 est un contrôleur latéral dit « optimal » configuré pour effectuer un contrôle latéral du véhicule 2, défini par un ensemble de paramètres de contrôle, à partir d'une minimisation d'une différence sur une valeur de contrôle entre une courbe de trajectoire de véhicule de référence (courbe cible ou souhaitée) et une courbe de trajectoire courante du véhicule correspondant à l'état courant du véhicule 2.

Dans un mode de réalisation, la courbe de trajectoire courante du véhicule peut être calculée à partir de l'angle de braquage du véhicule 2, à l'instant courant considéré, et d'un modèle de dynamique latéral du véhicule 2, en supposant que le véhicule décrit un cercle de manière à conserver une direction constante.

L'unité de détermination de distance maximale 103 (encore appelée « analyseur de e-horizon ») est configurée pour projeter les informations de tracé de route déterminées dans la scène du véhicule jusqu'à une distance donnée devant le véhicule 2, et pour déterminer la distance maximale à laquelle la fonction polynomiale représentant le tracé de route satisfait une ou plusieurs conditions de contrôle, à partir des informations de tracé de route projetées. Dans un mode de réalisation, les conditions de contrôle définissent des conditions d'acceptabilité d'un ensemble d'objectifs de contrôle de véhicule prédéfinis. Dans un tel mode de réalisation, la distance maximale représente la distance à laquelle la fonction polynomiale du détecteur de route basé sur la perception est acceptable pour de tels objectifs de contrôle de véhicule, tels que des objectifs de suivi de véhicule. Un objectif de contrôle peut être relatif à un paramètre lié aux dynamiques du véhicule et défini par une valeur cible de cette grandeur. Un exemple d'objectif de contrôle peut être par exemple le taux de lacet cible.

L'unité de détermination de distance maximale 103 permet ainsi d'obtenir une mesure correcte de l'espace navigable de route pour un suivi précis du centre de la voie de circulation du véhicule. L'unité de détermination de distance maximale 103 peut identifier en temps réel les limitations de la mesure polynomiale nécessaires de sorte que le contrôleur 102 puisse suivre une référence. Plus les limites de voie détectées sont loin, plus elles ont un impact sur la détermination d'un point latéral cible correct devant être suivi par le véhicule.

L'unité de détermination de distance maximale 103 garantit ainsi la limite à laquelle la fonction polynomiale représentant le tracé de route peut être utilisée pour les objectifs de contrôle de véhicule (suivi par exemple).

La référence cible devant être suivie par le contrôleur est encore appelée point cible de contrôle (encore appelé « point de contrôle d'anticipation » ou « lookahead point » en langue anglo-saxonne). Le point cible de contrôle permet au contrôleur 102 de prédire des commandes de trajectoires futures en anticipant les états futurs du véhicule 2. Le point cible de contrôle peut être placé devant le véhicule 2 à une distance de contrôle de distance. Le dispositif de contrôle latéral 10 peut en outre comprendre une unité de vérification de limites 104 configurée pour déterminer la valeur la plus petite que peut prendre cette distance. À partir de la trajectoire polynomiale, le contrôleur latéral 102 minimise un point donné de la trajectoire correspondant au point cible de contrôle.

Dans un mode de réalisation, l'unité de vérification de limites 104 (encore appelée « unité de vérification de limites de violation ») est configurée pour déterminer, pour l'état courant du véhicule, une enveloppe de stabilité du véhicule, définie par des limites correspondant aux conditions d'application d'un adaptateur de contrôle (105) du véhicule, et pour vérifier si les limites de l'enveloppe de stabilité sont atteintes par le véhicule à partir de la distance maximale déterminée. Les limites de l'enveloppe de stabilité correspondent ainsi aux limites d'application du contrôleur latéral 102.

L'unité de vérification de limites 104 peut ainsi déterminer si les capacités de détection de distance du système de perception 3 sont suffisantes pour appliquer le contrôleur latéral 102 à partir de la sortie de l'unité de détermination de distance maximale 103 et de la sortie du contrôleur latéral 102. L'unité de vérification de limites 104 peut notamment être configurée pour analyser l'enveloppe de stabilité du véhicule avec une variation des entrées maximale pour conserver de bonnes performances. Si les limites de l'enveloppe de stabilité pour l'application du contrôleur latéral 102 sont atteintes, l'unité de vérification de limites 104 peut émettre une notification d'atteinte de limites à l'adaptateur de contrôle 105 (encore appelé « contrôleur optimal adapté à l'e-horizon »).

L'adaptateur de contrôle 105 est configuré pour adapter les paramètres de contrôle du contrôleur latéral si les limites de l'enveloppe de stabilité sont atteintes, à partir de l'état courant du véhicule défini par un ensemble de paramètres d'état. Dans un mode de réalisation, l'ensemble de paramètres d'état définissant l'état courant du véhicule peut comprendre un ou plusieurs paramètres d'état parmi : l'angle de braquage, la vitesse angulaire de braquage, la vitesse du véhicule, la courbure de trajectoire de véhicule désirée.

L'adaptateur de contrôle 105 peut ainsi utiliser la sortie de l'unité de vérification de limites 104 et de l'unité de détermination de distance maximale 103 pour déterminer le meilleur contrôleur à appliquer jusqu'à l'e-horizon disponible, à partir de l'état courant du véhicule défini par l'ensemble de paramètres d'état.

Le dispositif de contrôle 10 peut comparer la détection de voie basée sur un capteur de type caméra avec un planificateur de trajectoire « possible » qui fournit une trajectoire courte, plus petite que celle requise par le contrôleur latéral 102 pour fonctionner correctement. Dans un tel mode de réalisation, le contrôleur 102 peut également détecter un manque de trajectoire et soit adapter sa distance d'anticipation cible ou ralentir.

L'adaptateur de contrôle 105 peut ainsi modifier avantageusement les critères de contrôle en utilisant l'information de trajectoire disponible en temps réel au niveau de l'unité de détermination de distance maximale 103.

Dans des modes de réalisation, le dispositif de contrôle 10 peut déterminer en outre un indicateur de disponibilité du système de contrôle autonome en fonction de la capacité du contrôleur latéral 102 à trouver une solution de contrôle et/ou un indicateur représentatif de la performance du contrôle par rapport à un seuil acceptable.

Le système de contrôle 100 peut comprendre une interface Homme-Machine HMI 106 (encore appelée « interface de contrôle ») prévue dans l'habitacle du véhicule, par exemple sur le tableau de bord du véhicule, pour générer un affichage de tels indicateurs pour informer ou avertir le conducteur ou les passagers plus généralement.

Dans des modes de réalisation, si la distance maximale déterminée par l'unité de détermination de distance maximale 103 (analyseur de e-horizon) n'est pas suffisante pour garantir un comportement correct du contrôle latéral du véhicule pour les cas les plus extrêmes (c'est-à-dire les cas atteignant les limites de contrôlabilité), le véhicule 2 peut adapter sa vitesse pour assurer sa sécurité. Plus précisément, le système de contrôle 100 peut déterminer si des informations courantes en provenance de capteurs du système de perception 3 (par exemple, caméra ou tout autre système de navigation) sont valides et contrôler le véhicule de la meilleure manière possible étant donné les informations courantes, en réduisant la vitesse en tant que dernière ressource pour garantir la sécurité du véhicule.

Dans des modes de réalisation, le dispositif de contrôle peut comprendre une unité de vérification de performance minimale 107 configurée pour vérifier des conditions relatives à un ensemble de paramètres auxiliaires relatifs à la qualité de la réponse du véhicule au contrôle appliqué par le dispositif de contrôle 10. Les paramètres auxiliaires de qualité du contrôle représentent ainsi la qualité du contrôle adapté à l'e-horizon. Dans un mode de réalisation, les paramètres auxiliaires peuvent comprendre :

- un paramètre de fiabilité de la réponse du véhicule au contrôle, et/ou

- un paramètre de faisabilité de la réponse du véhicule par rapport aux dynamiques du véhicule en fonction de distance maximale déterminée par l'unité de détermination de distance maximale 103.

L'unité de vérification de performance minimale 107 peut générer une notification d'alerte lorsque la qualité mesurée par les paramètres auxiliaires ne satisfait pas des limites de qualité prédéfinies.

L'unité de vérification de performance minimale 107 permet ainsi de vérifier différents paramètres auxiliaires relatifs à la réponse du véhicule au contrôle du point de vue des dynamiques du véhicule 2, et ainsi les performances minimales du contrôle.

Dans un mode de réalisation, le dispositif de contrôle peut comprendre en outre un gestionnaire d'actionneurs du véhicule 108 configuré pour contrôler un ou plusieurs contrôleurs du véhicule en leur envoyant des commandes en fonction de la distance maximale calculée par l'unité de détermination de distance maximale 103 et de la sortie du contrôleur latéral 102. De tels actionneurs peuvent comprendre par exemple l'actionneur du volant du véhicule, ainsi que l'actionneur de l'accélérateur du véhicule et/ou l'actionneur des pédales de freins du véhicule si le véhicule doit ajuster sa vitesse.

Le gestionnaire d'actionneurs 108 peut envoyer des messages de commandes aux actionneurs du véhicule (non représentés) via le contrôleur latéral 102 ou l'adaptateur de contrôle 105, en fonction du contrôle courant.

Dans des modes de réalisation, le dispositif de contrôle peut comprendre également un gestionnaire d'affichage 109 configuré pour activer ou désactiver l'interface de contrôle 106 du système de contrôle.

Le gestionnaire d'affichage 109 peut être en outre configuré pour générer un affichage du mode de contrôle du véhicule en fonction de la sortie de l'unité de détermination de distance maximale 103 et du niveau de qualité de l'adaptateur de contrôle 105, le mode de contrôle comprenant un mode parmi un mode non autonome où le système de contrôle n'est pas activé et un mode autonome où le système de contrôle est activé.

L'adaptateur de contrôle 105 peut transmettre au gestionnaire d'affichage 109 des informations indiquant qu'un mode dégradé du contrôle a été activé qui n'est plus le contrôleur latéral 102. Le gestionnaire d'affichage 109 peut également utiliser la sortie de l'unité de vérification de performance minimale 107 qui indique la qualité du contrôleur adapté à l'e-horizon pour générer un affichage d'une alarme lorsque la qualité du contrôle adapté à l'e-horizon (mesurée par les paramètres auxiliaires de qualité) ne satisfait pas les limites de qualité prédéfinies.

Dans des modes de réalisation, le système de contrôle 100 peut opérer selon deux modes de fonctionnement :

- dans un premier mode de fonctionnement, le système de contrôle peut ignorer une activation du mode de conduite autonome sélectionné par l'utilisateur (conducteur ou passager) s'il est déterminé, à partir de la distance maximale calculée, que le contrôle latéral optimal mis en oeuvre par le contrôleur 101 ne peut pas être appliqué ( par exemple si le tracé de route à suivre tel que détecté par le détecteur de route 101 n'est pas assez loin);

- dans un deuxième mode de fonctionnement, si le véhicule 2 est déjà en mode autonome et s'il est déterminé, à partir de la distance maximale calculée, que le contrôle latéral optimal mis en oeuvre par le contrôleur 101 ne peut pas être appliqué, l'adaptateur de contrôle 105 est activé pour adapter en temps réel le contrôle en considérant les capacités d'identification de tracé de route effectif, ce qui fournit les meilleurs performances possibles. Dans un tel mode, il peut être évalué si les performances du contrôle sont sécurisées et assurent un confort satisfaisant à partir de la sortie de l'unité de performance minimale 106.

Un exemple de la mise en oeuvre des étapes de contrôle appliquées par le procédé et le système de contrôle 100, selon les modes de réalisation de l'invention, est décrit ci- après.

Dans un tel exemple, il est supposé que la trajectoire du véhicule détectée par le détecteur de route 101 est initialement suffisamment longue pour permettre au contrôleur latéral 102 de suivre le trajet grâce au détecteur de route basé sur la perception 101 qui fournit la trajectoire à suivre et au contrôleur latéral optimal 102 qui suit la trajectoire.

Quand l'information de trajectoire détectée par le détecteur de route 101 n'est plus suffisante, par exemple en cas de réduction soudaine de distance de trajectoire fournie, ou lorsque l'information de trajectoire est trop bruitée, l'unité de détermination de distance maximale 103 (analyseur de e-horizon) peut en notifier l'adaptateur de contrôle 105 et l'unité de vérification de limites 104 pour que soit vérifié si le contrôleur latéral 102 peut garantir le contrôle, dans la situation identifiée, à partir de la distance maximale déterminée par l'unité de détermination de distance maximale 103. Si l'information de trajectoire détectée par le détecteur de route 101 est trop dégradée, l'adaptateur de contrôle 105 peut adapter le contrôle en considérant une nouvelle distance de trajectoire disponible.

Les modes de réalisation de l'invention permettent ainsi une modification dynamique des paramètres de contrôle de sorte que l'adaptateur de contrôle 105 peut atteindre le ou les objectifs de contrôle définis avec moins d'informations que le contrôleur latéral 102, en s'adaptant au manque d'informations.

Dans un mode de réalisation, un objectif de contrôle peut être le taux de lacet cible, le contrôleur latéral 102 étant alors basé sur une minimisation de la différence $\omega_{erreur}$ entre :

- le taux de lacet cible $\omega_{cible}$ (représentant le taux de lacet souhaité) calculé à partir de la courbure de trajectoire cible et de la position du véhicule, et

- le taux de lacet du véhicule courant $\omega_{mesuré}$ qui peut être déterminé à partir de mesures de capteur du système de perception 3.

Cette différence est encore appelée « erreur de taux de lacet ».

La commande d'angle de braquage de volant souhaitée est définie par :

$$\omega_{erreur} = \omega_{cible} - \omega_{mesuré} \quad (1)$$

Dans un mode de réalisation particulier, le contrôleur latéral 102 peut être configuré pour minimiser l'erreur de taux de lacet $\omega_{erreur}$ en la multipliant par un gain de contrôleur K pour obtenir l'angle de braquage de volant souhaité $\dot{\delta}$ selon l'équation (2):

$$\dot{\delta} = K.\omega_{erreur} \quad (2)$$

L'invention s'applique à tout contrôleur latéral 102 basé sur une localisation d'un point cible de contrôle telle que par exemple une méthode de poursuite pure, une méthode de Stanley, etc.

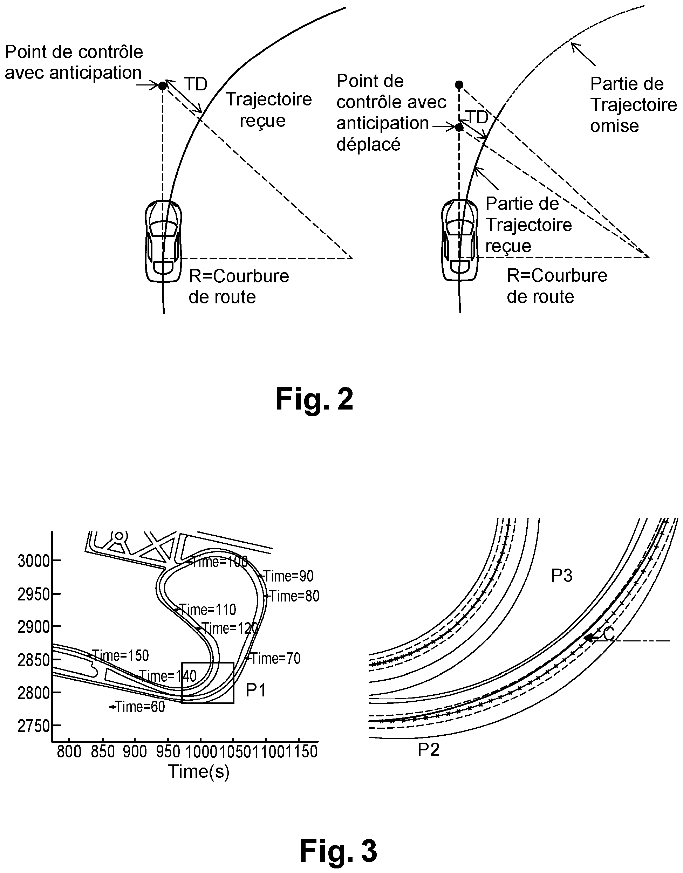

La figure 2 illustre un exemple de scénario dégradé. La figure 2 montre notamment comment le point cible de contrôle peut être modifié en cas d'information de trajectoire dégradée fournies par le détecteur de route 101.

Le point cible de contrôle optimal peut être déterminé à partir de la trajectoire reçue et notamment de la distance TD représentant la distance du point cible de contrôle. Cette distance est généralement calculée pour une réponse de contrôle optimale, mais peut être calculée pour une détection dégradée comme dans l'exemple de la figure 2.

À gauche de la figure 2, le véhicule 2 reçoit une trajectoire correcte à suivre, tracé de route fourni par le détecteur de route 101 (qui peut être par exemple un système de marquage de voie). À droite de la figure 2, il peut être observé que la génération de trajectoire n'est plus possible, les informations de trajectoire étant insuffisantes (la partie en pointillés n'est pas fournie). Dans un tel scénario, le véhicule 2 est alors amené à fonctionner en mode dégradé, pour essayer d'atteindre la même courbure de route mais avec moins d'informations a priori. Le contrôleur latéral 102 ne peut alors plus fonctionner de manière optimale par rapport aux paramètres de confort (objectif de contrôle), mais il peut néanmoins suivre la trajectoire correctement ou au moins maintenir le véhicule dans la voie.

Le fonctionnement du dispositif de contrôle 10 peut dépendre de la disponibilité d'un point cible de contrôle correct.

Comme illustré par la figure 2, si la trajectoire reçue est plus petite que la trajectoire optimale, le dispositif de contrôle 10 adapte le contrôle de manière à pouvoir réaliser l'objectif de contrôle, par exemple l'objectif de taux de lacet défini par le taux de lacet cible, dans un état dégradé.

Dans un mode de réalisation, l'adaptateur de contrôle 105 peut modifier en temps réel le contrôle effectué par le contrôleur latéral 102 en modifiant le point cible de contrôle et le gain K du contrôleur latéral 102 de manière à minimiser une fonction de coût prédéfinie. Cela permet de minimiser le plus possible l'effort de contrôle et l'erreur latérale malgré le manque d'information de trajectoire.

Dans un mode de réalisation, la fonction de coût J peut être par exemple définie par:

$$J = min\left(\int_{T_0}^{T_n} f(e_{lat}, SWA_{rate})\right) (3)$$

Dans l'équation (3), $e_{lat}$ représente l'erreur latérale du véhicule par rapport à la trajectoire, $SWA_{rate}$ représente la sortie de contrôle du dispositif de contrôle 10, qui dépend à la fois du point cible de contrôle et du gain du contrôleur), $T_0$ représentent l'horizon temporel initial et $T_n$ représente l'horizon temporel final pour l'évaluation temporelle, et f( , ) représente la fonction de poids.

Il convient de noter que la minimisation effectuée par le contrôleur latéral 102 est basée sur la même fonction de coût mais en ajoutant en plus la localisation du point cible de contrôle dans la minimisation. Ainsi, la même équation peut être utilisée lorsque le point cible de contrôle a besoin d'être dégradé (perception de trajectoire médiocre), en l'incluant dans l'équation 3 en tant que paramètre.

Lorsque l'horizon électronique (e-horizon) est réduit, la localisation du point cible de contrôle n'est plus un paramètre d'optimisation mais un point fixé dans la mesure où la meilleure performance est obtenue avec le point de contrôle le plus éloigné disponible qui est en dessous du point optimal.

L'équation (3) est basée sur une évolution d'un modèle de véhicule dans une optimisation « simulée » pour trouver les paramètres corrects. Le modèle de véhicule est utilisé par l'adaptateur de modèle 105 pour fournir une évolution du véhicule simulé dans un intervalle de temps $[T_0, T_n]$. Le contrôleur latéral 102 communique avec l'unité de détermination de limites 103 et le gestionnaire d'actionneurs 108. L'évolution du modèle de véhicule peut être utilisée pour déterminé la meilleure option de contrôle.

Le modèle de véhicule dynamique peut prendre en compte un ensemble de paramètres d'état relatifs aux dynamiques du véhicule. Le modèle de véhicule dynamique peut être représenté sous la forme matricielle suivante:

$$\dot{X}_v = A_v X_v + B_v u_v \quad (4)$$
$$Y_v = C_v X_v$$

Dans la représentation (4), $u_v$ désigne la commande de l'angle de braquage $\delta$ encore appelée (généralement exprimé en radians). Par ailleurs, $X_v$ désigne le vecteur d'état, représentant l'état courant du véhicule, défini par un ensemble de paramètres d'état selon la relation (5):

$$X_v = \begin{bmatrix} y_v & v_y & \psi_v & \omega_v \end{bmatrix} \quad (5)$$

Dans la formule (5) définissant le vecteur d'état $X_v$, $y_v$ désigne la position latérale du véhicule, $v_y$ désigne la vitesse latérale du véhicule, $\psi_v$ désigne l'angle de lacet et $\omega_v$ désigne le taux de lacet. L'angle de lacet est un paramètre qui renseigne sur la qualité du guidage de ce véhicule, notamment lors de la prise de virage. L'angle de lacet représente la rotation du véhicule autour de son axe vertical passant par son centre de gravité, cet angle étant repéré par rapport à un repère lié au sol. Le taux de lacet représente le mouvement de lacet du véhicule.

Dans un mode de réalisation, les matrices $A_v$, $B_v$ and $C_v$ du modèle dynamique du véhicule peuvent être défini selon les définitions (6) à (8) :

$$A_v = \begin{bmatrix} 0 & 1 & 0 & 0 \\ 0 & \frac{-(C_f + C_r)}{m v_x} & 0 & \frac{-aC_f + bC_r}{m v_x} - v_x \\ 0 & 0 & 0 & 1 \\ 0 & \frac{-aC_f + bC_r}{I_z v_x} & 0 & \frac{-(a^2 C_f + b^2 C_r)}{I_z v_x} \end{bmatrix} \quad (6)$$

$$B_v = \begin{bmatrix} 0 & \frac{C_f}{m} & 0 & \frac{aC_f}{I_z} \end{bmatrix}^T \quad (7)$$

$$C_v = \begin{bmatrix} 0 & 1 & 0 & 0 \\ 0 & 0 & 0 & 1 \end{bmatrix} \quad (8)$$

Dans les définitions des matrices $A_v$ et $B_v$, les grandeurs $C_f$ et $C_r$ désignent la rigidité de dérive (« cornering stiffness ») en N/rad (Newton par radian), respectivement dans les roues avant ($C_f$) et arrière ($C_r$), $v_x$ désigne la vitesse du véhicule qui peut être déterminée à partir de capteurs embarqués sur le véhicule 2, $m$ désigne la masse (en Kg) du véhicule, $I_z$ désigne le moment d'inertie du véhicule, a et $b$ désignent la distance (en mètres) entre le centre de gravité du véhicule et les roues avant (a) et entre le centre de gravité du véhicule et les roues arrière (b).

Le modèle de véhicule défini par (4) peut être appliqué pour fournir la vitesse latérale du véhicule $v_y$, et l'angle de lacet $\Psi_V$ du véhicule 2.

Le modèle de véhicule peut être utilisé pour reconstituer les taux de lacet futurs. Des matrices de coordonnées de vitesse globales sont ensuite remplies avec à partir de tels taux de lacet futurs, de telles matrice étant alors intégrées pour prédire les états futurs du véhicule.

Dans un mode de réalisation, le système de contrôle 100 peut comprendre une unité de détermination de coordonnées globales configurée pour calculer des coordonnées globaux du véhicule 2 représentant la vitesse longitudinale et la vitesse latérale du véhicule dans une représentation plane 2D, à partir des sorties fournies par le modèle de véhicule, sous la forme :

$$\dot{x}_{global} = \dot{x}.\cos(\psi) - \dot{y}.\sin(\psi)$$
$$\dot{y}_{global} = \dot{x}.\sin(\psi) + \dot{y}.\cos(\psi) \qquad (9)$$

Dans l'équation (9) :

- le paramètre $\dot{x}$ désigne la vitesse longitudinale du véhicule dans un cadre de référence du véhicule ;

- le paramètre $\ddot{y}$ désigne la vitesse latérale du véhicule dans un cadre de référence du véhicule ;

- le paramètre $\dot{x}_{global}$ désigne la vitesse longitudinale du véhicule dans un cadre de référence global ;

- le paramètre $\dot{y}_{global}$ désigne la vitesse latérale du véhicule dans un cadre de référence global ;

- le paramètre $\psi$ désigne représente l'angle de cap du véhicule ;

De tels paramètres sont utilisés par l'adaptateur de contrôle 105 pour calculer une réponse de contrôle correcte dans le cas où l'e-horizon est plus petit que celui requis pour un contrôle optimal.

Dans un exemple de réalisation, les actionneurs peuvent comprendre un actionneur d'angle de braquage. Les dynamiques de l'actionneur de l'angle de braquage, pris en compte par l'adaptateur de contrôle 105, peuvent par exemple être sous la forme :

$$G(s) = \frac{w_n^2}{s^2 + 2\zeta w_n s + w_n^2} \ (10)$$

Dans l'équation (10), $w_n$ désigne la fréquence naturelle du système de braquage, et $\zeta$ désigne le facteur d'amortissement, ces deux paramètres étant dépendants de la vitesse longitudinale du véhicule.

La figure 3 illustre le fonctionnement d'un contrôleur de l'art antérieur, selon un exemple de scénario.

Dans l'exemple de la figure 3, un véhicule a été utilisé sur une piste de test, correspondant à la piste de la partie gauche de la figure 3, et un capteur de trajectoire dégradé a été simulé en envoyant une trajectoire courte (et donc insuffisante) au dispositif de contrôle 10.

La partie de gauche de la figure 3 représente un scénario de test simulant une telle situation dégradée entre les secondes 55 et 70. La partie de droite de la figure 3 représente la zone de trajectoire P1 agrandie de la partie de gauche de la figure 3, dans laquelle il peut être observé un comportement correct, le véhicule suivant la trajectoire désirée, avant qu'une anomalie n'apparaisse au niveau de la zone désignée par « P2 », avant la seconde 55. Une fois qu'une anomalie est émulée, le véhicule réel 2 commence à dévier de sa trajectoire puisque le dispositif de contrôle 10 n'est pas adapté aux situations dégradées de sorte que le conducteur doit reprendre le contrôle au niveau du point C pour éviter que le véhicule 2 ne finisse complètement dans la voie de gauche, la reprise du contrôle par le conducteur correspondant à la partie P3.

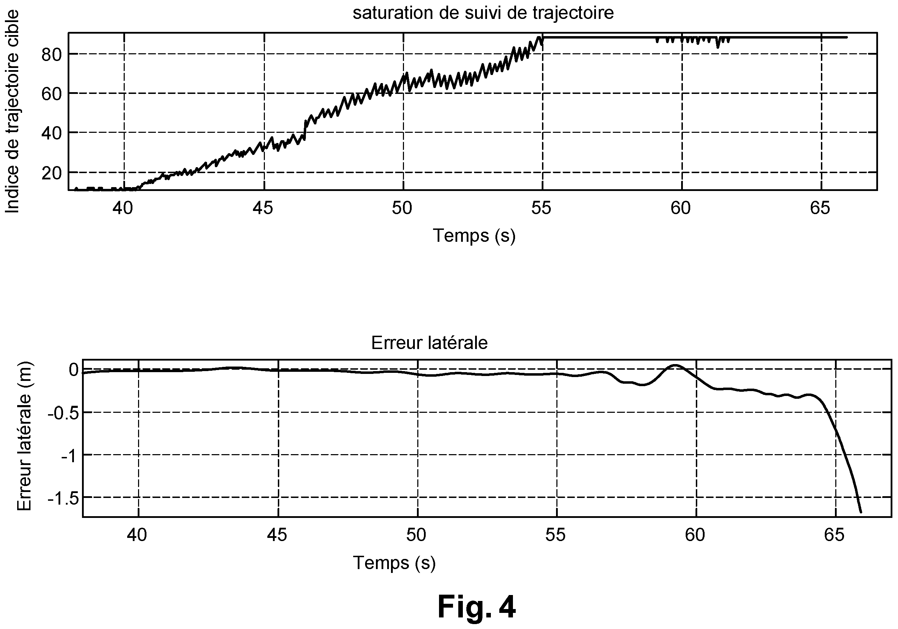

La figure 4 représente l'indice de vecteur de trajectoire cible et l'erreur de trajectoire correspondant au cas d'usage de la figure 3, pour un dispositif de contrôle de l'art antérieur.

Les diagrammes de la figure 4 permettent d'illustrer le contrôle effectué selon l'art antérieur : le dispositif de contrôle selon l'art antérieur utilise exclusivement un contrôleur latéral basé sur une minimisation d'erreur comme le contrôleur latéral 102 mais de manière statique. Le dispositif de contrôle selon l'art antérieur suit la trajectoire jusqu'au moment où la trajectoire devient trop petite pour les spécifications du contrôleur latéral 102.

Sur la partie supérieure de la figure 4, il peut être observé le moment où la trajectoire devient trop petite pour le dispositif de contrôle de l'art antérieur dans l'exemple de scénario de la figure 3, autour de 55 secondes, ce qui correspond au point où la trajectoire disponible maximale est atteinte.

Dans l'exemple de cas d'usage considéré sur les figures 3 et 4, la trajectoire est reçue sous la forme d'un vecteur de 90 points qui inclut différents paramètres dynamiques du véhicule tels que les coordonnés X et Y du véhicule dans le référentiel considéré, la vitesse du véhicule, l'accélération du véhicule, etc.

L'indice de trajectoire cible correspondant au diagramme supérieur sur la figure 4 représente le point cible de contrôle optimal déterminé à partir de la trajectoire reçu.

Quand l'indice atteint une valeur seuil, ici égale à 90, cela signifie qu'il n'est plus possible d'appliquer le dispositif de contrôle de l'état de la technique, l'indice étant saturé (saturation de suivi de trajectoire). Le diagramme inférieur de la figue 4 représente l'erreur latérale qui commence à diverger si la configuration du dispositif de contrôle optimal n'est pas adaptée. Dans l'exemple considéré, l'erreur commence à diverger autour de 56 secondes et si la trajectoire est trop petite, le véhicule finit par diverger complètement et à sortir des limites de voie ou de route. Sur le diagramme inférieur de la figure 4, il peut être observé que le véhicule atteint une erreur latérale de plus de 1,5m, avant que le conducteur ne reprenne le contrôle autour de 66 secondes.

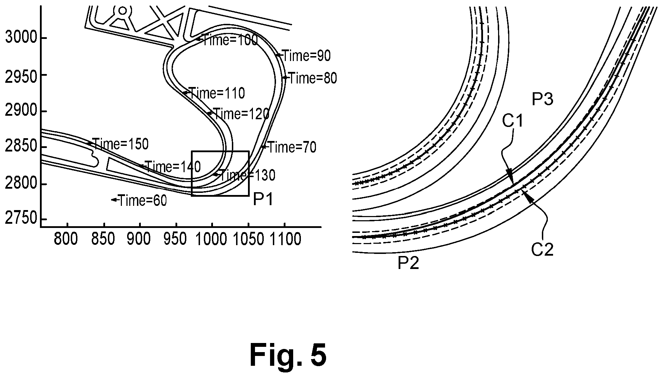

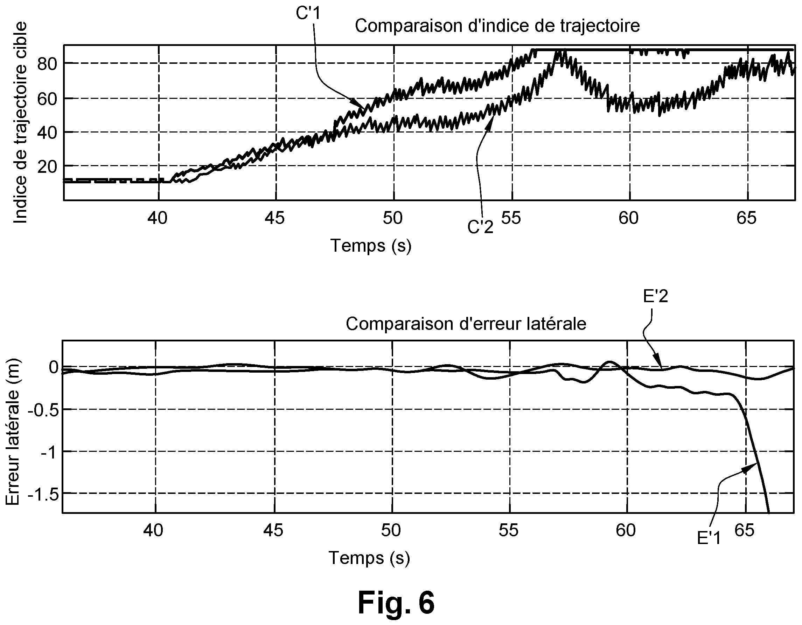

Les figures 5 et 6 illustrent les performances du dispositif de contrôle 10 selon les modes de réalisation de l'invention.

En particulier, la figure 5 représente le fonctionnement d'un dispositif de contrôle statique de l'art antérieur, et en comparaison, le fonctionnement du dispositif de contrôle 10 adapté à l'e-horizon, selon les modes de réalisation de l'invention, dans un exemple de scénario de test similaire à celui considéré en relation avec les figures 3 et 4.

Lorsque le contrôleur latéral 102 est reconfiguré par l'adaptateur de contrôle 105, selon les modes de réalisation de l'invention, le véhicule 2 peut suivre correctement la trajectoire même lorsqu'elle devient trop petite.

La figure 5 correspond à un scénario de test dans lequel un même véhicule 2 effectue deux tours sur la piste. La partie de gauche de la figure 5 représente la trajectoire du véhicule sur la piste de test utilisée, dans le scénario considéré. La partie de droite de la figure 5 est un agrandissement de la zone P1 extraite de la partie de gauche de la figure 5. Il peut être observé que la trajectoire est dégradée au niveau du même point P2 que dans le cas de test de la figure 3. La courbe C1 montre la trajectoire du véhicule 10 quand le dispositif de contrôle statique de l'art antérieur est utilisé et la courbe C2 représente les performances du véhicule en appliquant le dispositif de contrôle 10 dynamique, adapté à l'e-horizon, selon des modes de réalisation de l'invention. Il peut être observé qu'au niveau du point P3, l'application dynamique du contrôle adapté à l'e-horizon 102, comme illustré par la courbe C2, permet au véhicule de suivre correctement la trajectoire au-delà du point P2 sans avoir à modifier sa vitesse.

La figure 6 représente l'indice de vecteur de trajectoire cible et l'erreur de trajectoire correspondant au scénario de test considéré sur la figure 5, pour un dispositif de contrôle statique de l'art antérieur, et en comparaison, pour le contrôleur adapté à l'e-horizon, selon les modes de réalisation de l'invention.

Sur la figure 6, le dispositif de contrôle statique de l'art antérieur correspond à la courbe C'1 tandis que le dispositif de contrôle 10 dynamique selon les modes de réalisation de l'invention est représenté par la courbe C'2. Il peut être observé que le dispositif de contrôle statique de l'art antérieur (C'1) sature la trajectoire à 55 secondes (diagramme supérieur de la figure 6) tandis que le dispositif de contrôle dynamique 10, adapté à l'e-horizon, selon les modes de réalisation de l'invention, est capable de détecter de telles situations de saturation de trajectoire et de s'adapter à une nouvelle situation dégradée de capteur de trajectoire. Ainsi, le dispositif de contrôle dynamique 10, selon les modes de réalisation de l'invention, est capable d'adapter les paramètres de contrôle en temps réel et permet au véhicule de poursuivre en restant au centre de sa voie, même lorsque les informations de trajectoire sont insuffisantes ou dégradées. Le diagramme inférieur de la figure 6, représentant l'erreur latérale, montre que le dispositif de contrôle 10 selon les modes de réalisation surpasse les performances des dispositifs de contrôle statiques de l'art antérieur et permet de s'adapter à des situations de capteurs de trajectoire dégradées ou à des informations de trajectoires insuffisantes, en maintenant le véhicule 2 au centre de la voie et à une distance optimale de la ligne centrale.

Dans des modes de réalisation, le système de contrôle 1 peut être configuré pour calculer un ensemble d'indicateurs de contrôle qui peuvent être fournis au conducteur via une interface homme-machine, tel que par exemple un écran agencé sur le tableau de bord du véhicule 1.

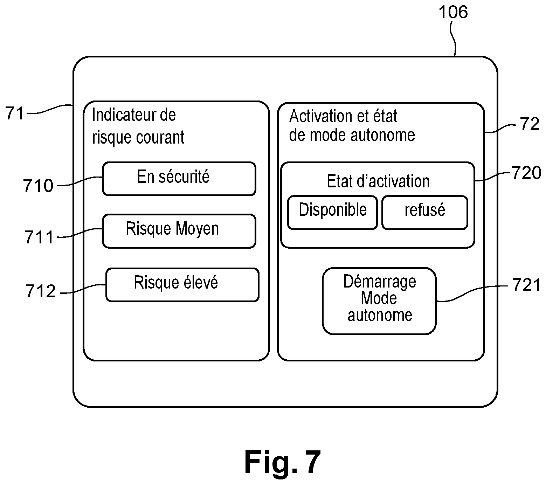

La figure 7 représente un exemple d'interface de contrôle 106 associé au dispositif de contrôle 10, sur laquelle des indicateurs de contrôle déterminés par le système sont affichés.

Dans un mode de réalisation, les indicateurs de contrôle peuvent comprendre un indicateur de risque courant 71 comprenant une information d'état du système de contrôle (par exemple actif ou inactif) et une indicateur de risque représentant le risque associé à l'activation du mode de conduite autonome.

Les indicateurs de risque 71 peuvent comprendre un indicateur de sécurité 710 comprenant une information de sécurité indiquant si le véhicule reçoit la trajectoire complète et si le contrôle est effectué dans des conditions optimales.

Les indicateurs de risque 71 peuvent comprendre un indicateur de risque moyen 711 indiquant si le système de contrôle fonctionne dans un mode dégradé. Dans un mode dégradé, si le véhicule est en mode manuel, le démarrage du mode autonome n'est pas autorisé et si le véhicule est déjà en mode autonome, le dispositif de contrôle 10 selon les modes de réalisation de l'invention est appliqué ;

Les indicateurs de risque peuvent comprendre également un indicateur de risque élevé 712 indiquant que la trajectoire reçue n'est pas suffisante pour que le système traite un état de capteur de trajectoire dégradé, auquel cas le contrôle peut être donné automatiquement au conducteur ; un signal sonore ou haptique peut être généré pour renforcer l'alerte faite au conducteur.

Par ailleurs, le système de contrôle peut déterminer un indicateur 7200 de disponibilité du système de contrôle automatisé (« disponible » ou « indisponible ») et un indicateur 7201 d'autorisation d'activation du système de contrôle automatisé (« refusé » ou « autorisé »). De telles informations peuvent être associées à un même ensemble 720 d'information de statut d'activation pour générer un affichage de ces informations dans un même bloc d'affichage.

Le conducteur peut activer le système de contrôle 1, par exemple en appuyant sur un bouton de commande 721 (dénommé « Démarrage Mode Autonome » sur la figure 7).

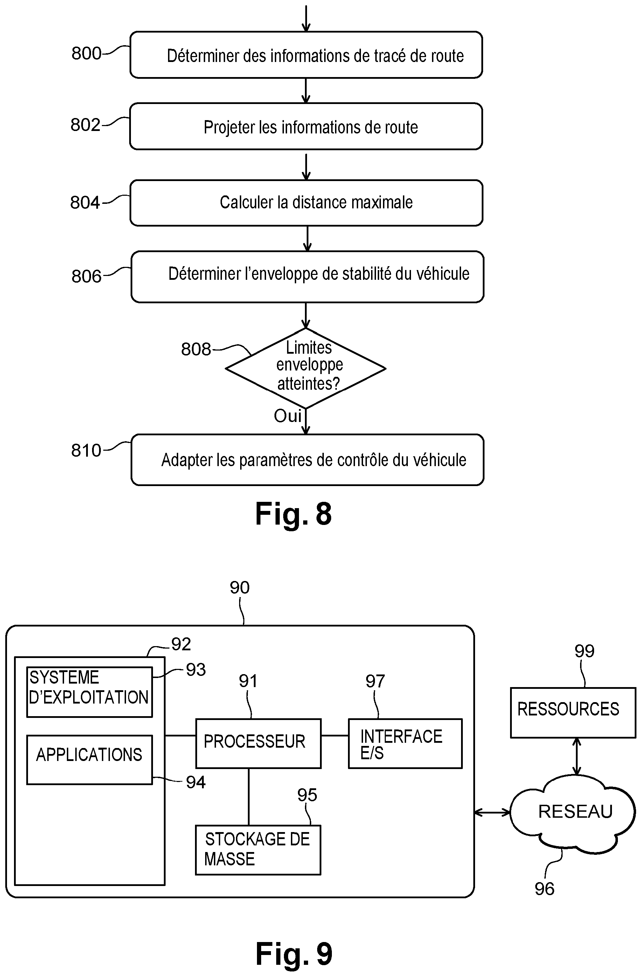

La figure 8 est un organigramme représentant le procédé de contrôle selon les modes de réalisation de l'invention.

Le procédé de contrôle est implémenté pour un état courant du véhicule 2.

A l'étape 800, des informations de tracé de route sont déterminées à partir d'informations fournies par le système de perception, le système de perception utilisant au moins un capteur de trajectoire pour déterminer les informations de tracé de route, les informations de tracé de route représentant la trajectoire à suivre par le véhicule 2. Les informations de tracé de route sont représentées par une fonction polynômiale.

A l'étape 802, les informations de tracé de route déterminées sont projetées dans la scène du véhicule jusqu'à une distance donnée.

A l'étape 804, la distance maximale à laquelle la fonction polynomiale représentant le tracé de route satisfait une ou plusieurs conditions de contrôle est déterminée à partir des informations de tracé de route projetées.

Si de telles conditions de contrôle sont satisfaites, la détection de trajectoire est correcte (avec une erreur maximale, exprimée en mètres, sur la détection du point cible de contrôle, l'erreur maximale pouvant être ajustée en fonction des capacités du système de contrôle 100 ; par exemple, l'erreur maximale peut être égal à 0,2 mètres), avec une distance suffisante pour que le contrôleur latéral 102 puisse opérer correctement.

Sinon si les conditions de contrôle ne sont pas satisfaites, le contrôleur 102 opérera en mode dégradé.

A l'étape 806, une enveloppe de stabilité du véhicule définie par des limites correspondant aux conditions d'application du contrôleur optimal 1020 du véhicule est déterminée.

L'enveloppe de stabilité est définie par la détection de trajectoire correcte entre les paramètres de distance maximum et minimum détectés par l'unité de détermination de distance maximale 103 et l'unité de vérification de limite 104.

A l'étape 808, il est déterminé si les limites de l'enveloppe de stabilité sont atteintes par le véhicule 2 à partir de la distance maximale déterminée. Si les limites sont atteintes, à l'étape 810, les paramètres de contrôle du contrôleur latéral 102 sont adaptés à l'e-horizon à partir de l'état courant du véhicule (comprenant la position courante du véhicule).

Les modes de réalisation de l'invention permettent de fournir une réponse du véhicule 2 au contrôle, adaptée à l'e-horizon.

Avantageusement, ils permettent d'évaluer la capacité de violation en temps réel du contrôleur nominal 102 en fonction des critères de confort/sécurité.

Ils permettent en outre de modifier la fonction de contrôle d'optimisation du contrôleur optimal 102 de manière à fournir la meilleure sortie adaptée aux capacités d'entrée.

Les modes de réalisation de l'invention permettent également de calculer un ensemble d'indicateurs de sécurité, à partir desquels le conducteur du véhicule peut être alerté en temps réel de l'état du véhicule courant, en fonction du niveau de dégradation observé.

Plus généralement, ils permettent de garantir la sécurité du véhicule, à partir d'une évaluation en temps réel des performances du contrôleur 102 et d'une adaptation des paramètres de contrôle.

L'homme du métier comprendra que le procédé de contrôle selon les modes de réalisation peut être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

En particulier, comme illustré sur la figure 9, le dispositif de contrôle décision 10 peut être implémenté sous la forme d'un ou plusieurs dispositifs informatiques 90 (appelé ci-après ordinateur). L'ordinateur 90 peut comporter un processeur 91, une mémoire 82, un dispositif de mémoire de stockage de masse 95, au moins une interface d'entrée/sortie (I/O) 97 (par exemple, l'interface IHM 70 ; l'interface I/O 97 peut inclure un ou plusieurs écrans vidéo, écrans tactiles, dispositifs de saisie et de commande tels que des boutons de commande, des microphones, etc.). L'ordinateur 90 peut également être couplé de manière fonctionnelle à une ou plusieurs ressources externes via un réseau 96 et/ou une interface I/O 97. Des ressources externes 99 peuvent inclure, mais sans y être limitées, des serveurs, des bases de données, des dispositifs de stockage de masse, des dispositifs périphériques, des services de réseau à base de nuage, ou toute autre ressource informatique appropriée qui peut être utilisée par l'ordinateur 90.

Le processeur 91 peut inclure un ou plusieurs dispositifs processeurs tels que des microprocesseurs, des microcontrôleurs, des unités centrales de traitement, ou tout autre dispositif qui manipule des signaux (analogiques ou numériques) en fonction d'instructions d'opérations qui sont stockées dans la mémoire 92. Le processeur 91 peut fonctionner sous la commande d'un système d'exploitation 93 qui réside dans la mémoire 92. Le système d'exploitation 93 peut gérer des ressources informatiques telles qu'un code de programme informatique intégré sous la forme d'une ou plusieurs applications logicielles 94 résidant dans la mémoire 92.

L'invention n'est pas limitée aux modes de réalisation décrits ci-avant à titre d'exemple non limitatif.

**Revendications**

1. Système de contrôle de véhicule (100) comprenant un système de perception (3) utilisant au moins un capteur de trajectoire pour déterminer un tracé de route, le tracé de route représentant la trajectoire à suivre par le véhicule, **caractérisé en ce que** le système comprend un dispositif de contrôle latéral (10) comprenant :

   - un détecteur de route (101) configuré pour déterminer, pour un état courant du véhicule, des informations de tracé de route devant le véhicule, à partir des informations fournies par ledit système de perception, le tracé de route étant représenté par une fonction polynômiale ayant un ordre donné;
   - un contrôleur latéral (102) basé sur une localisation d'un point cible de contrôle, le contrôleur latéral étant configuré pour effectuer un contrôle latéral du véhicule défini par un ensemble de paramètres de contrôle, à partir d'une minimisation d'une différence sur une valeur de contrôle entre une courbe de trajectoire du véhicule de référence et une courbe de trajectoire courante décrite par le véhicule, correspondant à l'état courant du véhicule;
   - une unité de détermination de distance maximale (103) configurée pour projeter les informations de tracé de route déterminées jusqu'à une distance donnée devant le véhicule, et déterminer la distance maximale à laquelle ladite fonction polynomiale satisfait une ou plusieurs conditions de contrôle à partir des informations de tracé de route projetées;
   - une unité de vérification de limites (104) configurée pour déterminer, pour l'état courant du véhicule, une enveloppe de stabilité du véhicule, définie par des limites correspondant aux conditions d'application d'un adaptateur de contrôle (105) du véhicule, et pour vérifier si lesdites limites de l'enveloppe de stabilité sont atteintes par le véhicule à partir de la distance maximale déterminée ;

   l'adaptateur de contrôle (105) étant configuré pour adapter lesdits paramètres de contrôle du contrôleur latéral à l'horizon électronique dudit au moins un capteur, si lesdites limites sont atteintes, à partir de l'état courant du véhicule.

2. Système selon la revendication 1, **caractérisé en ce que** l'état courant du véhicule est défini par au moins un paramètre d'état parmi l'angle de braquage du véhicule, la vitesse angulaire de braquage du véhicule, la vitesse du véhicule, la courbure cible du véhicule à l'instant courant considéré.

3. Système selon l'une des revendications précédentes, **caractérisé en ce que** les conditions de contrôle définissent des conditions d'acceptabilité d'un ensemble d'objectifs de contrôle de véhicule prédéfinis.

4. Système selon l'une des revendications précédentes, **caractérisé en ce que** le dispositif de contrôle latéral (10) comprend en outre une unité de vérification de performance minimale (107) configurée pour vérifier des conditions relatives à un ensemble de paramètres auxiliaires relatifs à la qualité de la réponse du véhicule au contrôle appliqué par le dispositif de contrôle latéral (10), lesdits paramètres de contrôle comprenant au moins :

   - un paramètre de fiabilité de la réponse du véhicule au contrôle, et
   - un paramètre de faisabilité de la réponse du véhicule par rapport aux dynamiques du véhicule en fonction de la distance maximale déterminée par l'unité de détermination de distance maximale.

**5.** Système selon l'une des revendications précédentes, **caractérisé en ce que** le dispositif de contrôle latéral (10) comprend en outre un gestionnaire d'actionneurs du véhicule (108) configuré pour gérer au moins un actionneur du véhicule en fonction de la distance maximale calculée par l'unité de détermination de distance maximale (103) et de la sortie du contrôleur latéral (102).

**6.** Système selon l'une des revendications précédentes, **caractérisé en ce que** le dispositif de contrôle latéral (10) comprend en outre un gestionnaire d'affichage (109) configuré pour générer un affichage du mode de contrôle du véhicule en fonction de la sortie de l'unité de détermination de distance maximale et du niveau de qualité de l'adaptateur de contrôle (105), le mode de contrôle comprenant un mode parmi un mode non autonome où le système de contrôle n'est pas activé et un mode autonome où le système de contrôle est activé.

**7.** Système selon l'une des revendications 4 et 6, **caractérisé en ce que** le niveau de la qualité de l'adaptateur de contrôle (105) est déterminé par l'unité de vérification de performance minimale (107), l'unité de vérification de performance minimale étant configurée pour générer un signal d'alerte si le niveau de qualité de l'adaptateur de contrôle (105) est supérieur à un seuil prédéfini.

**8.** Système selon l'une des revendications précédentes, **caractérisé en ce que** l'adaptateur de contrôle (105) est configuré pour adapter les paramètres de contrôle à partir d'une minimisation de la différence entre un taux de lacet cible du véhicule et un taux de lacet du véhicule courante.

**9.** Système selon la revendication 8, **caractérisé en ce que** le taux de lacet cible du véhicule est calculé à partir d'une courbure cible du véhicule et de la position courante du véhicule.

**10.** Système selon l'une des revendications 8 et 9, **caractérisé en ce que** l'adaptateur de contrôle (105) est configuré pour minimiser l'erreur de taux de lacet ($\omega_{error}$) en la multipliant par un gain de contrôleur (K).

**11.** Procédé de contrôle de véhicule implémenté dans un véhicule (2) comprenant un système de perception utilisant au moins un capteur de trajectoire de véhicule pour déterminer un tracé de route, le tracé de route représentant la trajectoire à suivre par le véhicule, et un contrôleur latéral (102), basé sur une localisation d'un point cible de contrôle, le contrôleur latéral effectuant un contrôle latéral du véhicule défini par un ensemble de paramètres de contrôle, à partir d'une minimisation d'une différence sur une valeur de contrôle entre une courbe de trajectoire du véhicule de référence et une courbe de trajectoire courante décrite par le véhicule, **caractérisé en ce que** le procédé comprend, pour un état courant du véhicule, les étapes suivantes:

- déterminer des informations de tracé de route correspondant à l'état courant du véhicule, à partir des informations fournies par ledit système de perception, le tracé de route étant représenté par une fonction polynômiale ;
- projeter les informations de tracé de route déterminées jusqu'à une distance donnée devant le véhicule,
- déterminer la distance maximale à laquelle ladite fonction polynomiale satisfait une ou plusieurs conditions de contrôle à partir des informations de tracé de route projetées ;
- déterminer une enveloppe de stabilité du véhicule définie par des limites correspondant aux conditions d'application d'un adaptateur de contrôle (105) du véhicule, et
- déterminer si lesdites limites de l'enveloppe de stabilité sont atteintes par le véhicule à partir de la distance maximale déterminée ;
- adapter lesdits paramètres de contrôle de l'adaptateur de contrôle à l'horizon électronique dudit au moins un capteur, si lesdites limites sont atteintes, à partir de l'état courant du véhicule.

**12.** Programme d'ordinateur comprenant des instructions de code de programme pour exécuter les étapes du procédé selon la revendication 11, lorsque ledit programme fonctionne sur un ordinateur.

**Patentansprüche**

**1.** Fahrzeugsteuerungssystem (100), das ein Wahrnehmungssystem (3) beinhaltet, das mindestens einen Trajektoriensensor verwendet, um einen Streckenverlauf zu bestimmen, wobei der Streckenverlauf die durch das Fahrzeug zu verfolgende Trajektorie darstellt, **dadurch gekennzeichnet, dass** das System eine laterale Steuerungsvorrichtung (10) beinhaltet, die Folgendes beinhaltet:

- einen Streckendetektor (101), der dazu konfiguriert ist, anhand der Informationen, die durch das Wahrnehmungssystem bereitgestellt werden, für einen aktuellen Zustand des Fahrzeugs Informationen über einen Streckenverlauf vor dem Fahrzeug zu bestimmen, wobei der Streckenverlauf durch eine Polynomfunktion dargestellt wird, die einen gegebenen Grad aufweist;

- eine laterale Steuerungseinheit (102), die auf einer Lokalisierung eines Steuerungszielpunkts basiert, wobei die laterale Steuerungseinheit dazu konfiguriert ist, eine laterale Steuerung des Fahrzeugs, die durch einen Satz Steuerungsparameter definiert wird, anhand einer Minimierung einer Differenz zu einem Steuerungswert zwischen einer Trajektorienkrümmung des Referenzfahrzeugs und einer von dem Fahrzeug beschriebenen aktuellen Trajektorienkrümmung, die dem aktuellen Zustand des Fahrzeugs entspricht, durchzuführen;

- eine Einheit zur Bestimmung einer maximalen Entfernung (103), die dazu konfiguriert ist, die bestimmten Streckenverlaufsinformationen bis zu einer gegebenen Entfernung vor dem Fahrzeug zu projizieren und die maximale Entfernung, bei der die Polynomfunktion eine oder mehrere Steuerungsbedingungen erfüllt, anhand der projizierten Streckenverlaufsinformationen zu bestimmen;

- eine Einheit zur Grenzenüberprüfung (104), die dazu konfiguriert ist, für den aktuellen Zustand des Fahrzeugs eine Stabilitätshülle des Fahrzeugs zu bestimmen, welche durch Grenzen, die den Anwendungsbedingungen einer Steuerungsanpassungseinheit (105) des Fahrzeugs entsprechen, definiert wird, und anhand der bestimmten maximalen Entfernung zu überprüfen, ob die Grenzen der Stabilitätshülle durch das Fahrzeug erreicht werden; wobei die Steuerungsanpassungseinheit (105) dazu konfiguriert ist, anhand des aktuellen Zustands des Fahrzeugs die Steuerungsparameter der lateralen Steuerungseinheit an den elektronischen Horizont des mindestens einen Sensors anzupassen, wenn die Grenzen erreicht sind.

2. System nach Anspruch 1, **dadurch gekennzeichnet, dass** der aktuelle Zustand des Fahrzeugs durch mindestens einen Zustandsparameter von Folgenden definiert wird: Lenkwinkel des Fahrzeugs, Lenkwinkelgeschwindigkeit des Fahrzeugs, Geschwindigkeit des Fahrzeugs, Zielkrümmung des Fahrzeugs zum betrachteten aktuellen Zeitpunkt.

3. System nach einem der vorhergehenden Ansprüche, **dadurch gekennzeichnet, dass** die Steuerungsbedingungen Annehmbarkeitsbedingungen für einen Satz vordefinierter Fahrzeugsteuerungszielsetzungen definieren.

4. System nach einem der vorhergehenden Ansprüche, **dadurch gekennzeichnet, dass** die laterale Steuerungsvorrichtung (10) ferner eine Einheit zur Überprüfung einer Mindestleistung (107) beinhaltet, die dazu konfiguriert ist, Bedingungen in Bezug auf einen Satz Zusatzparameter in Bezug auf die Qualität der Reaktion des Fahrzeugs auf die durch die laterale Steuerungsvorrichtung (10) angewendete laterale Steuerung zu überprüfen, wobei die Steuerungsparameter mindestens Folgendes beinhalten:

- einen Zuverlässigkeitsparameter der Reaktion des Fahrzeugs auf die Steuerung und
- einen Machbarkeitsparameter der Reaktion des Fahrzeugs in Bezug auf die Dynamiken des Fahrzeugs in Abhängigkeit von der durch die Einheit zur Bestimmung einer maximalen Entfernung bestimmten maximalen Entfernung.

5. System nach einem der vorhergehenden Ansprüche, **dadurch gekennzeichnet, dass** die laterale Steuerungsvorrichtung (10) ferner eine Einheit zur Verwaltung von Aktoren des Fahrzeugs (108) beinhaltet, die dazu konfiguriert ist, mindestens einen Aktor des Fahrzeugs in Abhängigkeit von der durch die Einheit zur Bestimmung einer maximalen Entfernung (103) berechneten maximalen Entfernung und von dem Ausgang der lateralen Steuerungseinheit (102) zu verwalten.

6. System nach einem der vorhergehenden Ansprüche, **dadurch gekennzeichnet, dass** die laterale Steuerungsvorrichtung (10) ferner eine Einheit zum Verwalten einer Anzeige (109) beinhaltet, die dazu konfiguriert ist, eine Anzeige des Steuerungsmodus des Fahrzeugs in Abhängigkeit von dem Ausgang der Einheit zur Bestimmung einer maximalen Entfernung und von dem Qualitätsniveau der Steuerungsanpassungseinheit (105) zu erzeugen, wobei der Steuerungsmodus einen Modus von einem nicht autonomen Modus, in dem das Steuerungssystem nicht aktiviert ist, und einem autonomen Modus, in dem das Steuerungssystem aktiviert ist, beinhaltet.

7. System nach einem der Ansprüche 4 und 6, **dadurch gekennzeichnet, dass** das Niveau der Qualität der Steuerungsanpassungseinheit (105) durch die Einheit zur Überprüfung einer Mindestleistung (107) bestimmt wird, wobei die Einheit zur Überprüfung einer Mindestleistung dazu konfiguriert ist, ein Warnsignal zu erzeugen, wenn das Qualitätsniveau der Steuerungsanpassungseinheit (105) über einem vordefinierten Schwellenwert liegt.

8. System nach einem der vorhergehenden Ansprüche, **dadurch gekennzeichnet, dass** die Steuerungsanpassungseinheit (105) dazu konfiguriert ist, die Steuerungsparameter anhand einer Minimierung der Differenz zwischen einer Zielgierrate des Fahrzeugs und einer aktuellen Gierrate des Fahrzeugs anzupassen.

9. System nach Anspruch 8, **dadurch gekennzeichnet, dass** die Zielgierrate des Fahrzeugs anhand einer Zielkrümmung des Fahrzeugs und der aktuellen Position des Fahrzeugs berechnet wird.

10. System nach einem der Ansprüche 8 und 9, **dadurch gekennzeichnet, dass** die Steuerungsanpassungseinheit (105) dazu konfiguriert ist, den Gierratenfehler ($\omega_{error}$) zu minimieren, indem dieser mit einer Steuerungseinheitsverstärkung (K) multipliziert wird.

11. Fahrzeugsteuerungsverfahren, das in einem Fahrzeug (2) implementiert wird, das ein Wahrnehmungssystem, das mindestens einen Fahrzeugtrajektoriensensor verwendet, um einen Streckenverlauf zu bestimmen, wobei der Streckenverlauf die durch das Fahrzeug zu verfolgende Trajektorie darstellt, und eine laterale Steuerungseinheit (102), die auf einer Lokalisierung eines Steuerungszielpunkts basiert, beinhaltet, wobei die laterale Steuerungseinheit eine laterale Steuerung des Fahrzeugs, die durch einen Satz Steuerungsparameter definiert wird, anhand einer Minimierung einer Differenz zu einem Steuerungswert zwischen einer Trajektorienkrümmung des Referenzfahrzeugs und einer von dem Fahrzeug beschriebenen aktuellen Trajektorienkrümmung durchführt, **dadurch gekennzeichnet, dass** das Verfahren für einen aktuellen Zustand des Fahrzeugs die folgenden Schritte beinhaltet:

   - Bestimmen von Streckenverlaufsinformationen, die dem aktuellen Zustand des Fahrzeugs entsprechen, anhand der Informationen, die durch das Wahrnehmungssystem bereitgestellt werden, wobei der Streckenverlauf durch eine Polynomfunktion dargestellt wird;
   - Projizieren der bestimmten Streckenverlaufsinformationen bis zu einer gegebenen Entfernung vor dem Fahrzeug,
   - Bestimmen der maximalen Entfernung, bei der die Polynomfunktion eine oder mehrere Steuerungsbedingungen erfüllt, anhand der projizierten Streckenverlaufsinformationen;
   - Bestimmen einer Stabilitätshülle des Fahrzeugs, die durch Grenzen definiert wird, die den Anwendungsbedingungen einer Steuerungsanpassungseinheit (105) des Fahrzeugs entsprechen, und
   - Bestimmen, anhand der bestimmten maximalen Entfernung, ob die Grenzen der Stabilitätshülle durch das Fahrzeug erreicht werden;
   - Anpassen der Steuerungsparameter der Steuerungsanpassungseinheit an den elektronischen Horizont des mindestens einen Sensors, wenn die Grenzen erreicht sind, anhand des aktuellen Zustands des Fahrzeugs.

12. Computerprogramm, das Programmcodeanweisungen zur Ausführung der Schritte des Verfahrens nach Anspruch 11 beinhaltet, wenn das Programm auf einem Computer abgearbeitet wird.

**Claims**

1. System (100) for controlling a vehicle comprising a perception system (3) that uses at least one trajectory sensor to determine a road layout, the road layout representing the trajectory to be followed by the vehicle, **characterized in that** the system comprises a lateral control device (10) comprising:

   - a road detector (101) configured to determine, for a current state of the vehicle, information about the road layout ahead of the vehicle on the basis of information provided by said perception system, the road layout being represented by a polynomial function having a given order;
   - a lateral controller (102) based on a location of a control target point, the lateral controller being configured to perform a lateral control of the vehicle defined by a set of control parameters, on the basis of a minimization of a difference in a control value between a reference trajectory curve of the vehicle and a current trajectory curve being described by the vehicle, corresponding to the current state of the vehicle;
   - a maximum distance determination unit (103) configured to project the road layout information that has been determined to a given distance ahead of the vehicle, and to determine the maximum distance at which said polynomial function satisfies one or more control conditions on the basis of the projected road layout information;
   - a limit checking unit (104) configured to determine, for the current state of the vehicle, a vehicle stability envelope which is defined by limits corresponding to the application conditions of a control adapter (105) of the vehicle, and to check whether said limits of the stability envelope have been reached by the vehicle on the basis of the maximum distance that has been determined;

the control adapter (105) being configured to adapt said control parameters of the lateral controller to the electronic horizon of said at least one sensor if said limits have been reached, on the basis of the current state of the vehicle.

2. System according to Claim 1, **characterized in that** the current state of the vehicle is defined by at least one state parameter from the following: the steering angle of the vehicle, the steering angular velocity of the vehicle, the speed of the vehicle, the target curve taken by the vehicle at the current instant in question.

3. System according to either of the preceding claims, **characterized in that** the control conditions define acceptability conditions of a set of predefined vehicle control objectives.

4. System according to one of the preceding claims, **characterized in that** the lateral control device (10) furthermore comprises a minimum performance verification unit (107) configured to check conditions relating to a set of auxiliary parameters that relate to the quality of the response of the vehicle to the control applied by the lateral control device (10), said control parameters comprising at least:

   - a reliability parameter for the response of the vehicle to the control, and
   - a feasibility parameter for the response of the vehicle with respect to the dynamics of the vehicle as a function of the maximum distance determined by the maximum distance determination unit.

5. System according to one of the preceding claims, **characterized in that** the lateral control device (10) furthermore comprises a vehicle actuator manager (108) configured to manage at least one actuator of the vehicle as a function of the maximum distance calculated by the maximum distance determination unit (103) and of the output of the lateral controller (102).

6. System according to one of the preceding claims, **characterized in that** the lateral control device (10) furthermore comprises a display manager (109) configured to generate a display of the control mode of the vehicle as a function of the output of the maximum distance determination unit and of the quality level of the control adapter (105), the control mode comprising one mode from the following: a non-autonomous mode, in which the control system is not activated, and an autonomous mode, in which the control system is activated.

7. System according to either of Claims 4 and 6, **characterized in that** the quality level of the control adapter (105) is determined by the minimum performance checking unit (107), the minimum performance checking unit being configured to generate a warning signal if the quality level of the control adapter (105) is greater than a predefined threshold.

8. System according to one of the preceding claims, **characterized in that** the control adapter (105) is configured to adapt the control parameters on the basis of a minimization of the difference between a target yaw rate of the vehicle and a current yaw rate of the vehicle.

9. System according to Claim 8, **characterized in that** the target yaw rate of the vehicle is calculated on the basis of a target curve taken by the vehicle and the current position of the vehicle.

10. System according to either of Claims 8 and 9, **characterized in that** the control adapter (105) is configured to minimize the yaw rate error ($\omega_{error}$) by multiplying it by a controller gain (K).

11. Vehicle control method implemented in a vehicle (2) comprising a perception system that uses at least one vehicle trajectory sensor to determine a road layout, the road layout representing the trajectory to be followed by the vehicle, and a lateral controller (102) based on a location of a control target point, the lateral controller performing a lateral control of the vehicle defined by a set of control parameters, on the basis of a minimization of a difference in a control value between a reference trajectory curve of the vehicle and a current trajectory curve being described by the vehicle, **characterized in that** the method comprises, for a current state of the vehicle, the following steps:

   - determining road layout information corresponding to the current state of the vehicle, on the basis of information provided by said perception system, the road layout being represented by a polynomial function;
   - projecting the road layout information that has been determined to a given distance ahead of the vehicle,
   - determining the maximum distance at which said polynomial function satisfies one or more control conditions on the basis of the projected road layout information;
   - determining a vehicle stability envelope defined by limits corresponding to the application conditions of a control adapter (105) of the vehicle, and
- determining whether said limits of the stability envelope have been reached by the vehicle on the basis of the maximum distance that has been determined;
- adapting said control parameters of the control adapter to the electronic horizon of said at least one sensor if said limits have been reached, on the basis of the current state of the vehicle.

12. Computer program comprising program code instructions for carrying out the steps of the method according to Claim 11 when said program is run on a computer.

**Fig. 1**

Point de contrôle
avec anticipation

TD

Trajectoire
reçue

Point de
contrôle avec
anticipation
déplacé

TD

Partie de
Trajectoire
omise

Partie de
Trajectoire
reçue

R=Courbure
de route

R=Courbure
de route

## Fig. 2

3000

2950

2900

2850

2800

2750

Time=100

Time=90

Time=80

Time=110

Time=120

Time=150

Time=140

Time=70

Time=60

P1

800 850 900 950 1000 1050 1100 1150
Time(s)

P3

C

P2

## Fig. 3

saturation de suivi de trajectoire

Erreur latérale

Fig. 4

EP 4 263 312 B1

**Fig. 5**

C'1

Comparaison d'indice de trajectoire

C'2

Comparaison d'erreur latérale

E'2

E'1

Fig. 6

EP 4 263 312 B1

Fig. 7

800 — Déterminer des informations de tracé de route

802 — Projeter les informations de route

804 — Calculer la distance maximale

806 — Déterminer l'enveloppe de stabilité du véhicule

808 — Limites enveloppe atteintes?

Oui

810 — Adapter les paramètres de contrôle du véhicule

# Fig. 8

90

92
93 — SYSTEME D'EXPLOITATION

APPLICATIONS

94

91 — PROCESSEUR

97 — INTERFACE E/S

95 — STOCKAGE DE MASSE

99 — RESSOURCES

RESEAU

96

# Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9731755 B1